# EUROPEAN PATENT APPLICATION

(11) **EP 1 705 467 A1**
(43) Date of publication of application: **27.09.2006**
(21) Application number: 05075684.0
(22) Date of filing: 23.03.2005
(51) Int. Cl.: G01G 19/44, G01G 21/22

(54) **A set of bathroom scales**

(71) Applicant: Eggtimer Kitchengadgets Inter AB, SE-269 36 Bastad (SE)
(72) Inventor: Ek, Bengt, SE-269 36 Bastad (SE)
(74) Representative: Wallengren, Yngvar

(57) **Abstract**

The disclosure relates to a set of bathroom scales with a base portion (1) resting on a substrate (2) such as a floor, and a support surface (3) on which the user of the scales stands. The bathroom scales have a display (6) which shows the user's weight and has sensor elements (5) which sense the weight of the user. The support surface has an upwardly arched convex surface which realises a correct positioning of the point of gravity of the user of the scales.

## Description

### TECHNICAL FIELD

The present invention relates to a set of bathroom scales comprising a base portion for resting on a substrate, a support surface on which the user stands, a display for indicating the weight of the user, and sensor elements for sensing the weight of the user.

### BACKGROUND ART

Scales, in particular bathroom scales, are previously known in innumerable different variations. The scales are primarily mechanical, employing analog display of the weight of the user, or digital involving digital display of the weight of the user.

The support surface of the scales is planar in relation to the substrate on which the scales stand. When the person who is to weigh himself stands on the scales there is no indication showing where the person is to stand. This entails that the person in question often positions himself and his point in gravity incorrectly, for example far out towards the edges or corners of the scales in relation to the weight-sensing elements of the scales. Incorrect positioning of the point of gravity of the user entails that the scales do not show a correct measurement result.

Digital scales often display the measurement result with a greater degree of accuracy than mechanical scales. If the measurement result is displayed with an accuracy of a tenth of a kilo, incorrect positioning of the point of gravity of the user may result in a difference of the displayed measurement result corresponding to several tenths. This is not desirable, since the intention is to achieve a correct measurement result every time the person uses the scales.

EP 1 304 552 A1 previously discloses a set of bathroom scales which, in addition to the weighing function, also measures the body fat of the person being weighed. This latter function requires superior electric contact between the support surface of the scales and the feet of the user. To this end, the support surface has an upwardly convex arched central region of bowl form, i.e. largely rotation-symmetrical arching, and a planar edge portion peripheral thereabout. The arching is so slight that it only achieves electric contact at least partly even under the arch of the foot of the user.

The bowl-shaped or partially spherical central region has no corrective effect on the position assumed by the user of the scales, in particular not about the axis of symmetry of the bowl.

### PROBLEM STRUCTURE

The present invention has for its object to design the bathroom scales intimated by way of introduction so as to obviate the drawbacks in prior art technology. In particular, the present invention has for its object to design the bathroom scales so that they include means for correct positioning of the user in relation to the weight-sensing sensor elements of the bathroom scales.

### SOLUTION

The object forming the basis of the present invention will be attained if the bathroom scales intimated by way of introduction are characterised in that the support surface has an upwardly arched convex surface for positioning of the point of gravity of the user of the scales.

### BRIEF DESCRIPTION OF THE ACCOMPANYING DRAWINGS

The present invention will now be described in greater detail hereinbelow, with reference to the accompanying Drawings- In the accompanying Drawings:
Fig. 1 is a side elevation of a set of bathroom scales with a raised display; and
Fig. 2 is a top plan view of a set ofbathroom scales.

### DESCRIPTION OF PREFERRED EMBODIMENT

In the following description, directional and positional indications will be employed such as forwards, backwards, upwards and downwards. These relate to a situation which is normal for the use of the set of scales according to the present invention when weighing a person.

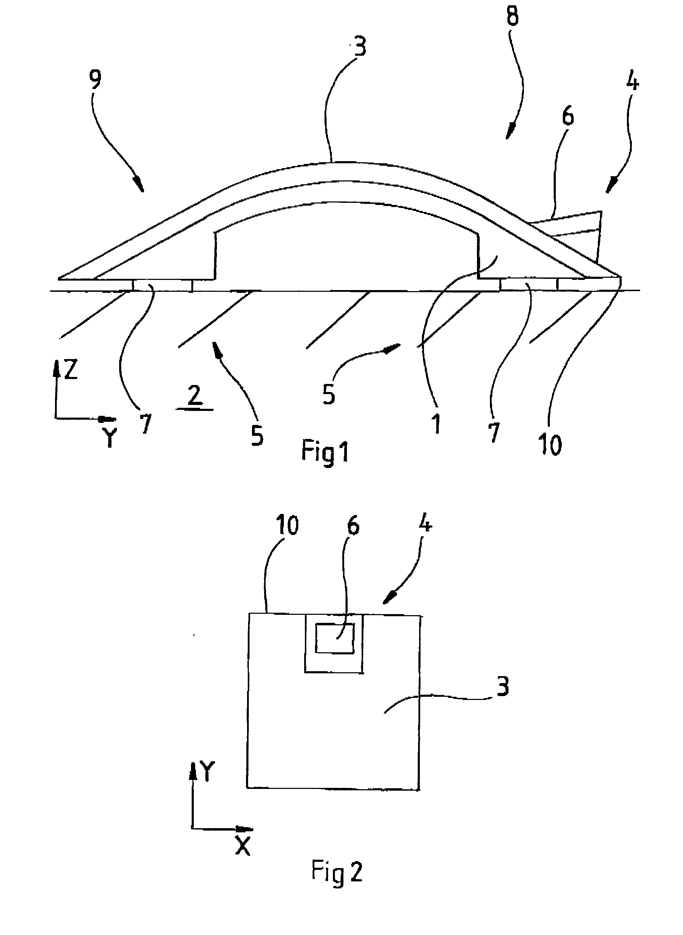

Fig. 1 shows a set of bathroom scales with a base portion 1 which rests on a substrate 2 such as a floor. The scales also display a support surface 3 on which the user of the scales is to stand. The support surface 3 which, seen from above, is rectangular (though the corners may be rounded), is an upwardly arched convex surface in the direction of the axis Z which, as will be explained in greater detail hereinbelow, realises a correct positioning of the point of gravity of the user of the scales in relation to the sensor elements 5 of the scales. The sensor elements 5 sense the weight of the user of the scales.

Indication of the weight of the user is put into effect by means of a display 6.

The support surface 3 has means 4 which correctly positions the user of the scales in his/her lateral direction, the direction of the axis X, in relation to the sensor elements 5 which are placed in the feet 7 of the scales. The lateral direction of the person using the scales relates to the direction between the person's shoulders.

The support surface 3 is substantially upwardly simply curved with an axis of curvature which extends in the lateral direction (the direction of the axis X on the Drawing). This implies that the support surface 3 has, in its central region (in the direction of the axis Y), a transverse, upwardly directed ridge which preferably extends unbroken in the direction of the axis X between the opposing side edges of the support surface 3. In front of and behind the ridge, the support surface 3 has inclining surface portions which, in relation to the substrate 2, display considerable inclination (15-30°), sufficient to evoke a feeling of discomfort in a person standing thereon. These sloping surface portions may be almost planar or arched.

The arcuate height of the arched support surface 3, i.e. the distance in the vertical direction between the top of the ridge and a plane which is defined by the front and back edge lines of the support surface is considerable, of the order of magnitude of between 10 and 30%, preferably between 15 and 20%, of the distance between these edge lines.

With of the aid of the curved formation of the support surface 3, the user assumes a correct positioning in the depth direction, along the axis Y, on the support surface 3.

If the user stands too far to the front on the scales, in the positive Y direction, in front the curvature 8 of the support surface with the display ahead of him or her, the user is standing on a sloping surface. This feels uncomfortable, since the user of the scales experiences a forward falling sensation. If the user stands too far back, behind the curvature 9 of the support surface with the display 6 in front of him or her, the user will also be standing on a sloping surface. This also feels uncomfortable, since the user experiences a sensation of falling backwards. Unconsciously, the person using the scales will correct his or her positioning.

The support surface 3 may be formed by compression moulding, bending, injection moulding, casting or be formed by other means. The support surface 3 if preferably manufactured from plastic or metal.

The display 6 constitutes the means 4 whose purpose is to correctly position the feet of the user in the lateral direction of the user. The means 4 may also be different types of anti-slip coatings which are disposed on the surface 3. The anti-slip coating may, by its positioning on the support surface 3, indicate where the user is to place his feet.

The anti-slip coating may be a skid safety tape with a rough surface which reduces the risk of slipping given that the user may have wet feet. The anti-slip coating may also consist of elevations or depressions in the support surface 3 in the form of buttons, grooves etc.

The display 6 is centrally positioned along the one straight and substantially horizontal front edge 10 of the scales. When the user stands on the scales, it is natural to assume a position with one foot on either side of the display 6 in order to have free visibility to be able to read the measurement result.

The display 6 is raisable to an active reading position as illustrated in Fig. 1, from its lowered position flush with the curved support surface 3 where the display 6 is substantially horizontal.

The scales, seen from above as shown in Fig. 2, are of rectangular configuration as was mentioned above, the sensor elements 5 being positioned in each corner of the scales in order to achieve a reliable measurement result.

### DESCRIPTION OF ALTERNATIVE EMBODIMENTS

The support surface 3 may also be slightly double arched, as may be realised by a bending of a surface which simultaneously curves in two directions.

## Claims

1. A set of bathroom scales comprising a base portion (1) for resting on a substrate (2), an upwardly arched, convex support surface (3) on which the user of the scales stands, a display (6) for indicating the weight of the user and sensor elements (5) for sensing the user's weight, **characterised in that** the support surface (3) has its major axis of curvature directed in the lateral direction of the user of the scales for positioning of the point of gravity of the user in the correct position in a forward/rearward direction for the user.

2. The scales as claimed in Claim 1, **characterised in that** the support surface (3) includes means (4) for correctly positioning the user in the lateral direction of the user.

3. The scales as claimed in Claim 1 or 2, **characterised in that** the support surface (3) is of single curvature, the surface having a formation which is substantially cylindrical.

4. The scales as claimed in Claim 2 or 3, **characterised in that** the display (6) constitutes the means (4) whose purpose is to correctly position the user's feet in the lateral direction.

5. The scales as claimed in any of Claims 1 to 4, **characterised in that** the display (6) is raisable to an active position from its lowered position flush with the support surface (3) where the display (6) is substantially hoizontal.

6. The scales as claimed in any of Claims 1 to 5, **characterised in that** the scales, seen from above, are rectangular and have sensor elements (5) in each corner of the scales.
